(19) Europäisches Patentamt
European Patent Office
Office européen des brevets

(11) **EP 3 857 255 B1**

(12) **EUROPÄISCHE PATENTSCHRIFT**

(45) Veröffentlichungstag und Bekanntmachung des Hinweises auf die Patenterteilung:
**14.05.2025 Patentblatt 2025/20**

(21) Anmeldenummer: **19732325.6**

(22) Anmeldetag: **18.06.2019**

(51) Internationale Patentklassifikation (IPC):
*G01S 7/03* (2006.01)     *G01S 7/35* (2006.01)
*G01S 7/40* (2006.01)     *G01S 13/93* (2020.01)

(52) Gemeinsame Patentklassifikation (CPC):
**G01S 7/4017; G01S 7/03; G01S 7/35;** G01S 13/931

(86) Internationale Anmeldenummer:
**PCT/EP2019/066025**

(87) Internationale Veröffentlichungsnummer:
**WO 2020/064155 (02.04.2020 Gazette 2020/14)**

(54) **RADARSENSOR MIT SYNCHRONISIERTEN HOCHFREQUENZBAUSTEINEN**

RADAR SENSOR HAVING SYNCHRONIZED HIGH-FREQUENCY MODULES

CAPTEUR RADAR POURVU DE MODULES HAUTE FRÉQUENCE SYNCHRONISÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2018 DE 102018216538**

(43) Veröffentlichungstag der Anmeldung:
**04.08.2021 Patentblatt 2021/31**

(73) Patentinhaber: **Robert Bosch GmbH**
**70442 Stuttgart (DE)**

(72) Erfinder:
• **SCHOOR, Michael**
  **70195 Stuttgart (DE)**
• **MAYER, Marcel**
  **89173 Lonsee (DE)**
• **STEINBUCH, Dirk**
  **71299 Wimsheim (DE)**

(56) Entgegenhaltungen:
WO-A1-2012/152474      US-A- 5 940 025
US-A1- 2015 276 919

**Beschreibung**

Die Erfindung betrifft einen Radarsensor mit mindestens zwei synchron arbeitenden Hochfrequenzbausteinen, die jeweils mindestens einen Signalpfad aufweisen, in dem die Phase des übermittelten Hochfrequenzsignals um eine temperaturabhängige Phasendifferenz verändert wird.

Stand der Technik

Bei Radarsensoren für Kraftfahrzeuge besteht im Zuge der Bestrebungen, dem Ziel eines vollständig autonomen Fahrens näher zu kommen, eine Tendenz zu zunehmender Komplexität und insbesondere zu einer Erhöhung der Anzahl der Sende- und Empfangskanäle, beispielsweise um MIMO-Konzepte (Multiple Input Multiple Output) oder digitale Beamforming-Konzepte zu realisieren. Unter Zuverlässigkeits- und Verlustleistungsaspekten ist es dabei wünschenswert, die Größe der in den Radarsensoren verwendeten Hochfrequenzbausteine (MMICs; Monolithic Microwave Integrated Circuits) zu begrenzen und statt dessen eine Vielzahl von vorzugsweise gleich aufgebauten MMICs einzusetzen, die so miteinander synchronisiert sind, dass die Phasenbeziehungen zwischen den in allen Sendekanälen gesendeten Signalen bekannt sind und bei der Auswertung der Empfangssignale angemessen berücksichtig werden können.

Aufgrund des Platzbedarfes der einzelnen MMICs werden bei zunehmender Anzahl der Bausteine die Abstände zwischen den einzelnen MMICs so groß, dass die Signallaufzeiten der zur Synchronisation dienenden Signale nicht vernachlässig werden können. Eine besondere Schwierigkeit ergibt sich daraus, dass bei größeren räumlichen Abständen zwischen den einzelnen MMICs auch nicht mehr davon ausgegangen werden kann, dass alle MMICs die gleiche Temperatur haben, so dass aufgrund des Temperaturgangs der elektronischen Bauelemente Laufzeit- und Phasendifferenzen unbekannter Größe auftreten können.

Offenbarung der Erfindung

Aufgabe der Erfindung ist es, einen Möglichkeit zu schaffen, ohne Beeinträchtigung der Funktion des Radarsensors eine genaue Synchronisation der Hochfrequenzbausteine auch im Fall temperaturabhängiger Phasendifferenzen zu erreichen.

Diese Aufgabe wird erfindungsgemäß dadurch gelöst, dass in jedem Hochfrequenzbaustein parallel zu dem Signalpfad ein Phasendetektor geschaltet ist, der ein Signal liefert, das temperaturunabhängig bei einer bestimmten bekannten Phasendifferenz ein Extremum annimmt, und dass in dem Signalpfad ein Phasenschieber angeordnet ist, mit dem die Phasendifferenz so einstellbar ist, dass das Signal des Phasendetektors das Extremum annimmt, und dass eine Steuereinrichtung dazu ausgebildet ist, die Phasendifferenzen in den Signalpfaden der mindestens zwei Hochfrequenzbausteine so einzustellen, dass das Signal des Phasendetektors das Extremum annimmt, und anhand der unter diesen Bedingungen bestimmbaren Phasendifferenzen die Hochfrequenzbausteine miteinander zu synchronisieren.

Die Erfindung bietet den Vorteil, dass die ihrer Natur nach unbekannten temperaturabhängigen Phasendifferenzen mit Hilfe des Phasenschiebers und des Phasendetektors auf bekannte Werte eingestellt werden können, so dass sie bei der Synchronisation der Hochfrequenzbausteine berücksichtigt werden können. Die erfindungsgemäß verwendeten Phasendetektoren ermöglichen zwar keine quantitative Messung der Phasendifferenz, haben dafür doch den Vorteil, dass der Punkt, an dem ihr Signal das Extremum annimmt, von der Temperatur unabhängig ist, so dass bei der Justierung der Phasendifferenz keine störenden Temperatureinflüsse auftreten können. Die in den einzelnen Hochfrequenzbausteinen hinzuzufügenden Komponenten, also die Phasendetektoren und Phasenschieber, lassen sich problemlos in die Bausteine integrieren ohne die Verlustleistung oder die Messgenauigkeit der Komponenten nennenswert zu beeinträchtigen.

Vorteilhafte Ausgestaltungen und Weiterbildungen der Erfindung sind in den Unteransprüchen angegeben.

Bei den Phasendetektoren kann es sich beispielsweise um Gleichrichterdioden handeln, die, wenn sie mit den Signalen von entgegengesetzten Enden des Signalpfades beaufschlagt werden, als Ausgangssignal eine Gleichspannung liefern, die zu der überlagerten Amplitude der Signale proportional ist und somit abhängig von der Phasendifferenz zwischen einem Maximum (bei konstruktiver Überlagerung) und einem Minimum (null bei völliger Auslöschung der Signale) variiert.

Als Phasenschieber im Signalpfad kann beispielsweise ein IQ-Modulator verwendet werden.

Die Synchronisation der verschiedenen Hochfrequenzbausteine kann über spezielle Synchronisationssignale erfolgen, die zwischen den Bausteinen ausgetauscht werden. In einer anderen Ausführungsform wird das Sendesignal eines Hochfrequenzbausteins bzw. eines Sendekanals dieses Bausteins (des Masters) zugleich als Synchronisationssignal für einen anderen Baustein (Slave) verwendet. Dabei kann jeder einzelne Baustein mehrere Signalpfade aufweisen, in denen potentiell temperaturabhängige Phasendifferenzen auftreten können. In dem Fall ist jedem dieser Signalpfade ein Phasendetektor und ein Phasenschieber zugeordnet.

Jeder Hochfrequenzbaustein kann einen eigenen spannungsgesteuerten lokalen Oszillator zur Erzeugung des Hochfrequenzsignals aufweisen. Zur Synchronisation der Oszillatoren in den verschiedenen Bausteinen kann dann ein gemeinsames Referenzsignal dienen, das allen Bausteinen zugeführt wird. Da der Übermittlungspfad für dieses Referenzsignal keinen Temperaturgang aufweist, sind die Phasendifferenzen, die sich aus den unterschiedlichen Laufzeiten des Referenzsignals zu den einzelnen Oszillatoren ergeben, bekannt bzw. durch geeignete Wahl der Leitungslängen auf bekannte Werte einstellbar.

Bei einem FMCW-Radar (Frequency Modulated Continuous Wave) weist jeder Hochfrequenzbaustein je Empfangskanal einen Mischer auf, in dem das empfangene Signal mit einem Anteil des zum gleichen Zeitpunkt gesendeten Signals gemischt wird, so dass ein Zwischenfrequenzsignal erzeugt wird, dessen Spektrum im Messbetrieb des Radarsensors über die Abstände und Relativgeschwindigkeiten der georteten Objekte Auskunft gibt. In einem oder mehreren Kalibriermodi können diese Mischer dazu verwendet werden, die Phasendifferenzen in verschiedenen geschlossenen Signalpfadketten zu messen. Da zumindest einige dieser Ketten auch den Pfad des Synchronisationssignals von einem Hochfrequenzbaustein zum anderen enthalten, lassen sich, wenn die Phasendifferenzen für die übrigen Signalpfade mit Hilfe der Phasendetektoren und Phasenschieber kalibriert wurden, alle relevanten Phasendifferenzen bestimmen, so dass die Hochfrequenzbausteine korrekt miteinander synchronisiert werden können.

In einer Ausführungsform kann jeder Hochfrequenzbaustein einen zusätzlichen Mischer enthalten, mit dem die komplexe Amplitude (Betrag und Phase) des Sendesignals überwacht werden kann.

Im folgenden wird ein Ausführungsbeispiel anhand der Zeichnung näher erläutert.

Es zeigen:

Fig. 1     eine vereinfachte Schaltskizze eines erfindungsgemäßen Radarsensors mit zwei miteinander synchronisierten Hochfrequenzbausteinen; und

Fig. 2     eine Signalkennlinie eines Phasendetektors, wie er in den Hochfrequenzbausteinen nach Fig. 1 verwendet wird.

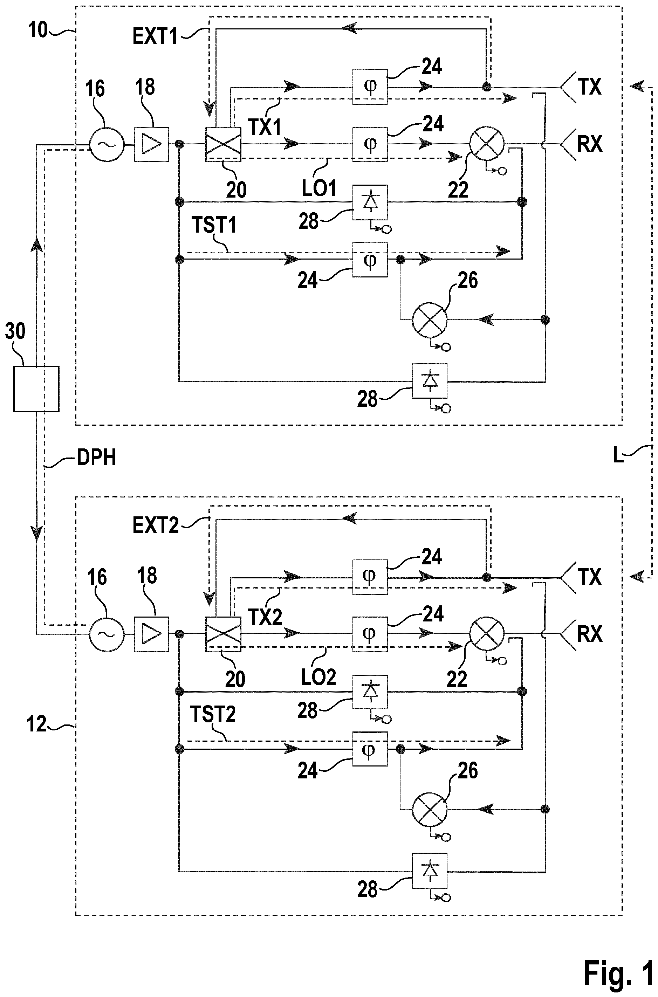

Der in Fig. 1 gezeigte Radarsensor weist zwei Hochfrequenzbausteine 10, 12 auf, die beispielsweise als MMICs ausgebildet sind und auf einer gemeinsamen Platine angeordnet sein können. Jeder Hochfrequenzbaustein weist mehrere Sendekanäle und mehrere Empfangskanäle auf. Aus Gründen der Vereinfachung der Darstellung ist jedoch für jeden Hochfrequenzbaustein nur ein einziger Sendekanal TX und ein einziger Empfangskanal RX dargestellt.

Zur Synchronisation der Hochfrequenzbausteine 10, 12 ist ein Signalpfad L vorgesehen, der die Ausgänge der Sendekanäle TX der beiden Hochfrequenzbausteine miteinander koppelt. Der Radarsensor kann beispielsweise so betrieben werden, dass der Hochfrequenzbaustein 10 als Master fungiert und der Hochfrequenzbaustein 12 als Slave, der das auf dem Signalpfad L übermittelte Signal als Synchronisationssignal verwendet. Da die beiden Hochfrequenzbausteine 10, 12 notwendig in einem gewissem Abstand zueinander auf der Platine angeordnet sein müssen, hat das auf dem Signalpfad L übermittelte Signal eine gewisse Signallaufzeit, die zu einer a-priori unbekannten Phasendifferenz L führt, die für eine korrekte Synchronisation der Bausteine kompensiert werden muss.

Jeder der beiden Hochfrequenzbausteine 10, 12 enthält einen lokalen Oszillator 16 mit nachgeschaltetem Verstärker 18. Das Ausgangssignal des Verstärkers 18 wird über einen Koppler 20 einerseits in den Sendekanal TX eingespeist und als Sendesignal gesendet, und es wird andererseits einem ersten Eingang eines Mischers 22 zugeführt. Einem zweiten Eingang des Mischers 22 wird das im Empfangskanal RX empfangene Signal zugeführt, so dass der Mischer 22 als Ausgangssignal das Mischprodukt der an den beiden Eingängen anliegenden Signale liefert.

In dem Hochfrequenzbaustein 10 führt ein Signalpfad EXT1 vom Ausgang des Sendekanals TX zurück zum Koppler 20. Das ermöglicht es, anstelle des Signals des eigenen lokalen Oszillators 16 dieses Bausteins ein über den Signalpfad L eintreffendes Signal als externes Sendesignal zu verwenden. Ein Signalpfad vom Koppler 20 zum Ausgang des Sendekanals TX ist mit TX1 bezeichnet. Ein Signalpfad vom Koppler 20 zum Mischer 22 ist mit LO1 bezeichnet. Diese beiden Signalpfade enthalten jeweils einen Phasenschieber 24, der beispielsweise durch einen IQ-Modulator gebildet wird.

Wenn im Empfangskanal RX kein Signal empfangen wird, kann am zugehörigen Eingang des Mischers 22 über einen Signalpfad TST1 das Ausgangssignal des Verstärkers 18 direkt eingekoppelt werden. Auch der Signalpfand TST1 enthält einen Phasenschieber 24. Der Ausgang dieses Phasenschiebers ist mit einem Eingang eines weiteren Mischers 26 verbunden. Dem anderen Eingang dieses Mischers kann das Sendesignal zugeführt werden, das am Ausgang des Sendekanals TX abgegriffen wird.

Zwischen diesen Ausgang des Sendekanals TX und den Ausgang des Verstärkers 18 ist ein Phasendetektor 28 geschaltet, der beispielsweise durch eine Gleichrichterdiode gebildet wird. Ein weiterer Phasendetektor 28 ist zwischen dem Ausgang des Verstärkers 18 und dem Empfangs-Eingang des Mischers 22 geschaltet.

Die Eingänge der lokalen Oszillatoren 16 der beiden Hochfrequenzbausteine 10, 12 sind an eine gemeinsame Referenzsignalquelle 30 angeschlossen, die dazu dient, die Oszillatoren miteinander zu synchronisieren. Die Verbindungen zwischen den beiden Oszillatoren 16 und der Referenzsignalquelle 30 können als ein weiterer Signalpfad DPH betrachtet werden, auf dem eine Phasendifferenz $\underline{DPH}$ auftreten kann, die von den jeweiligen Leitungslängen abhängig ist. Beispielsweise kann die Anordnung so gewählt werden, dass die Leitungen von der Referenzsignalquelle 30 zu jedem der beiden Oszillatoren 16 die gleiche Länge haben. In dem Fall gilt die Phasenbeziehung $\underline{DPH}$ = 0.

Der Hochfrequenzbaustein 12 hat den gleichen Aufbau wie der Hochfrequenzbaustein 10. Die verschiedenen Signalpfade sind hier mit der gleichen Buchstabenkennung wie bei dem Hochfrequenzbaustein 10 bezeichnet, jedoch mit dem Index "2" anstelle von "1".

In dem Signalpfad TX1 tritt eine Phasendifferenz $\underline{TX1}$ auf, die eine von der lokalen Temperatur abhängige Komponente haben kann. Dasselbe gilt auch für die Signalpfade LO1, EXT1 und TST1. Die zugehörigen Phasendifferenzen werden hier jeweils mit den gleichen Bezugszeichen bezeichnet, jedoch mit einem Unterstrich versehen. Entsprechendes gilt auch für die Signalpfade im Hochfrequenzbaustein 12. Auch die Phasendifferenz $\underline{L}$ im Signalpfad L ist im allgemeinen temperaturabhängig.

Für eine Synchronisation der beiden Hochfrequenzbausteine 10, 12 ist es erforderlich, die temperaturabhängigen Phasendifferenzen zu kalibrieren. Dazu kann der Radarsensor in vier verschiedenen Kalibriermodi betrieben werden.

In einem Kalibriermodus 1 stellt der Hochfrequenzbaustein 10 sein Sendesignal (Ausgang des Sendekanals TX) dem Hochfrequenzbaustein 12 als Synchronisations- und Sendesignal zur Verfügung. Das Signal läuft dann über die Signalpfade TX1, L, EXT2 und LO2 zum Mischer 22. Dort wird als Messsignal das Mischprodukt mit dem Signal gebildet, das dem Mischer 22 im Hochfrequenzbaustein 12 über den Signalpfad TST2 zugeführt wird. Das Ausgangssignal des Mischers repräsentiert dann die folgende Phasendifferenz:

$$D1 = (\underline{DPH} + \underline{TX1} + \underline{L} + \underline{EXT2} + \underline{LO2}) - \underline{TST2} \qquad (1)$$

In einem Kalibriermodus 2 stellt der Hochfrequenzbaustein 12 sein Sendesignal dem Mischer des Hochfrequenzbausteins 10 bereit. Das Signal läuft dabei über die Signalpfade TX2, L, EXT1 und LO1 zum Mischer 22 des Hochfrequenzbausteins 10. Dort wird das Mischprodukt mit dem über den Signalpfad TST1 zugeführten Signal gebildet. Das Ausgangssignal des Mischers 22 ist in diesem Fall

$$D2 = (- \underline{DPH} + \underline{TX2} + \underline{L} + \underline{EXT1} + \underline{LO1}) - \underline{TST1} \qquad (2)$$

In einem Kalibriermodus 3 stellt der Hochfrequenzbaustein 10 seinem eigenen Mischer das Sendesignal bereit, das über den Signalpfad LO1 übermittelt wird. Dort wird das Mischprodukt mit dem Signal gebildet, das als Referenzsignal über den Signalpfad TST1 übermittelt wird. Das Ausgangssignal des Mischers entspricht dann der Phasendifferenz

$$D3 = \underline{LO1} - \underline{TST1} \qquad (3)$$

In einem Kalibriermodus 4 stellt der Hochfrequenzbaustein 12 dem eigenen Mischer 22 das Sendesignal bereit, das dem Mischer über den Signalpfad LO2 zugeführt wird. Dort wird das Mischprodukt mit dem Referenzsignal gebildet, das über den Signalpfad TST2 zugeführt wird. Das Ausgangssignal des Mischers repräsentiert dann die Phasendifferenz

$$D4 = \underline{LO2} - \underline{TST2} \qquad (4)$$

Durch die Messungen in den vier Kalibriermodi erhält man ein Gleichungssystem mit den zehn Variablen: $\underline{DPH}$, $\underline{TX1}$, $\underline{L}$, $\underline{EXT2}$, $\underline{LO2}$, $\underline{TST2}$, $\underline{TX2}$, $\underline{EXT1}$, $\underline{LO1}$ und $\underline{TST1}$.

Darin ist $\underline{DPH}$ anhand der Leitungslängen bestimmbar und kann deshalb als bekannt angenommen werden. Für die Kalibrierung der beiden Hochfrequenzbausteine ist die Phasendifferenz $\underline{L}$ nicht unmittelbar relevant, sondern nur die Summe aus den Phasendifferenzen $\underline{L}$ + $\underline{EXT2}$ bzw. die Summe $\underline{L}$ + $\underline{EXT1}$, so dass $\underline{L}$ als unabhängige Variable eliminiert werden kann und statt dessen nur die unabhängigen Variablen ($\underline{L}$ + $\underline{EXT2}$) und $\underline{L}$ + $\underline{EXT1}$) betrachtet zu werden brauchen. Es verbleiben somit acht Unbekannte, mit denen das Gleichungssystem aber immer noch unterbestimmt ist.

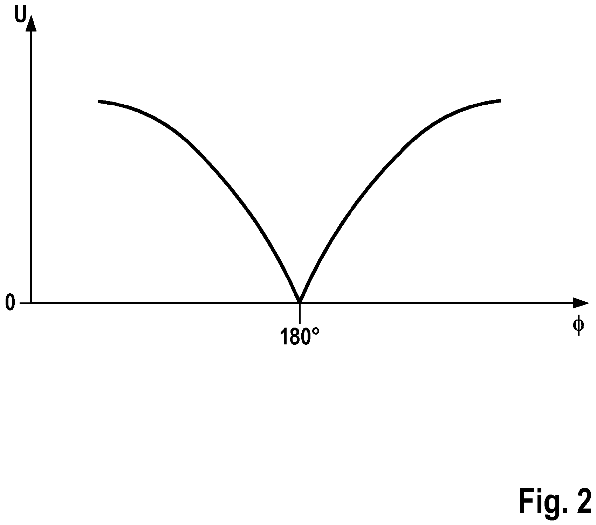

Für eine Lösung des Gleichungssystems müssen deshalb vier der acht Unbekannten auf andere Weise bestimmt werden. Statt jedoch diese Unbekannten direkt zu messen (was wieder aktive Komponenten mit einem eigenen unbekannten Temperaturgang erfordern würde), werden erfindungsgemäß mit Hilfe der Phasendetektoren 28 und der Phasenschieber 24 die unbekannten Phasendifferenzen auf bekannte Werte justiert. Dazu werden Phasendetektoren 28 verwendet, die zwar keine absolute Messung der Phasendifferenz gestatten aber aufgrund ihres spezifischen Kennlinienverlaufes eine temperaturunabhängige Bestimmung einer Phasendifferenz erlauben, bei der die Kennlinie ein Minimum (oder Maximum) annimmt. Ein Beispiel für solche Kennlinie ist in Fig. 2 gezeigt. Hier ist eine Gleichspannung U, die über der als Phasendetektor 28 dienenden Gleichrichterdiode abfällt, als Funktion der Phasendifferenz $\phi$ der Signale aufge-

tragen, die einander in der Gleichrichterdiode überlagert werden. Bei einem sinusförmigen Verlauf der überlagerten Signale weist die Kennlinie Maxima bei den Phasendifferenzen 0 und 360° auf, und bei der Phasendifferenz von 180° befindet sich ein ausgeprägtes, aufgrund des (an dieser Stelle nicht differenzierbaren) Kennlinienverlaufes scharf lokalisierbares Minimum. Mit Hilfe des zugehörigen Phasenschiebers 24 lässt sich dann die Phasendifferenz so einstellen, dass das vom Phasendetektor gelieferte Ausgangssignal U dieses Minimum annimmt. Dann ist bekannt, dass die Phasendifferenz zwischen den miteinander verglichenen Signalen 180° beträgt.

In Fig. 1 lässt sich auf diese Weise mit Hilfe des Phasendetektors 28, der im Hochfrequenzbaustein 10 zwischen den Verstärker 18 und den Ausgang des Sendekanals TX geschaltet ist, und mit Hilfe des Phasenschiebers 24 im Signalpfad TX1 die Phasendifferenz TX1 auf 180° einstellen. Mit Hilfe des Phasendetektors 28, der zwischen den Verstärker 18 und den Mischer 22 geschaltet ist, und mit Hilfe des Phasenschiebers 24 im Signalpfad TST1 lässt sich die Phasendifferenz TST1 auf 180° einstellen. Entsprechendes gilt auch für die Phasendifferenzen TX2 und TST2 im Hochfrequenzbaustein 12. Damit lassen sich dann aus Gleichungen (3) und (4) auch LO1 und LO2 bestimmen, so dass das verbleibende Gleichungssystem nach den Unbekannten (L + EXT2) und (L + EXT1) aufgelöst werden kann. Da somit alle relevanten Phasenverschiebungen temperaturunabhängig bestimmbar sind, gelingt es, die Hochfrequenzbausteine 10 und 12 präzise miteinander zu synchronisieren.

Im gezeigten Beispiel kann darüber hinaus mit Hilfe des Mischers 26 das im jeweiligen Sendekanal TX gesendete Signal unmittelbar mit dem Signal verglichen werden, das im Kalibriermodus 1 bzw. 2 dem Mischer 22 zugeführt wird.

Etwaige Abweichungen können dann mit Hilfe des Phasenschiebers 24 im Signalpfad LO1 bzw. LO2 kompensiert werden.

Die Funktionen der oben beschriebenen Komponenten der Hochfrequenzbausteine 10, 12 im Messbetrieb und in den verschiedenen Kalibriermodi werden durch eine nicht gezeigte elektronische Steuereinrichtung gesteuert.

**Patentansprüche**

1. Radarsensor mit mindestens zwei synchron arbeitenden Hochfrequenzbausteinen (10, 12), die jeweils mindestens einen Signalpfad (TX1, TST1; TX2, TST2) aufweisen, in dem die Phase des übermittelten Hochfrequenzsignals um eine temperaturabhängige Phasendifferenz verändert wird, **dadurch gekennzeichnet, dass** in jedem Hochfrequenzbaustein (10, 12) parallel zu dem Signalpfad (TX1, TST1; TX2, TST2) ein Phasendetektor (28) geschaltet ist, der ein Signal (U) liefert, das temperaturunabhängig bei einer bestimmten Phasendifferenz ein Extremum annimmt, dass in dem Signalpfad (TX1, TST1; TX2, TST2) ein Phasenschieber (24) angeordnet ist, mit dem die Phasendifferenz so einstellbar ist, dass das Signal (U) des Phasendetektors das Extremum annimmt, und dass eine elektronische Steuereinrichtung dazu ausgebildet ist, die Phasendifferenzen in den Signalpfaden der mindestens zwei Hochfrequenzbausteine so einzustellen, dass das Signal (U) des Phasendetektors das Extremum annimmt, und anhand der unter diesen Bedingungen bestimmbaren Phasendifferenzen die Hochfrequenzbausteine miteinander zu synchronisieren.

2. Radarsensor nach Anspruch 1, bei dem der Phasendetektor (28) durch eine Gleichrichterdiode gebildet wird, an der die zu vergleichenden Signale einander überlagert werden.

3. Radarsensor nach Anspruch 1 oder 2, bei der der Phasenschieber (24) durch einen IQ-Modulator gebildet wird.

4. Radarsensor nach einem der vorstehenden Ansprüche, bei dem jeder Hochfrequenzbaustein (10, 12) einen lokalen Oszillator (16) aufweist und die lokalen Oszillatoren (16) der verschiedenen Hochfrequenzbausteine (10, 12) über Leitungen von bekannter Länge mit einer gemeinsamen Referenzsignalquelle (30) verbunden sind.

5. Radarsensor nach einem der vorstehenden Ansprüche, bei dem jeder Hochfrequenzbaustein (10, 12) einen Mischer (22) aufweist, der dazu ausgebildet ist, ein in einem Empfangskanal (RX) empfangenes Signal mit einem in einem in einem Sendekanal (TX) gesendeten Signal zu mischen.

6. Radarsensor nach Anspruch 5, bei der ein Synchronisationssignalausgang jedes Hochfrequenzbausteins (10, 12) über einen Signalpfad (L) mit einem Synchronisationssignaleingang jedes anderen Hochfrequenzbausteins (12, 10) koppelbar ist und das über dem Synchronisationssignalpfad (L) empfangene Signal in jedem Hochfrequenzbaustein über einen weiteren Signalpfad (EXT1, EXT2) dem Mischer (22) dieses Hochfrequenzbausteins als Sendesignal zuführbar ist.

7. Radarsensor nach Anspruch 6, bei dem in jedem der Hochfrequenzbausteine (10, 12) ein Ausgang mindestens eines Sendekanals (TX) den Synchronisationseigang und den Synchronisationsausgang dieses Hochfrequenzbausteins bildet.

8. Radarsensor nach Anspruch 6 oder 7, bei dem dem Mischer (22) jedes Hochfrequenzbausteins (10, 12) über einen Signalpfad (TST1) das Ausgangssignal des eigenen lokalen Oszillators (16) als Testsignal zuführbar ist.

9. Radarsensor nach einem der Ansprüche 5 bis 8, bei dem jeder Hochfrequenzbaustein (10, 12) einen weiteren Mischer (26) aufweist, der dazu ausgebildet ist, die komplexe Amplitude des im Sendekanal (TX) dieses Hochfrequenzbausteins gesendeten Signals zu überwachen.

**Claims**

1. Radar sensor with at least two synchronously operating radio-frequency modules (10, 12), each having at least one signal path (TX1, TST1; TX2, TST2), in which the phase of the transmitted radio-frequency signal is changed by a temperature-dependent phase difference, **characterized in that** a phase detector (28) is connected in parallel with the signal path (TX1, TST1; TX2, TST2) in each radio-frequency module (10, 12) and provides a signal (U) which assumes an extreme value regardless of the temperature for a certain phase difference, **in that** a phase shifter (24) is arranged in the signal path (TX1, TST1; TX2, TST2) and can be used to adjust the phase difference such that the signal (U) from the phase detector assumes the extreme value, and **in that** an electronic control device is designed to adjust the phase differences in the signal paths of the at least two radio-frequency modules such that the signal (U) from the phase detector assumes the extreme value, and to synchronize the radio-frequency modules with each other on the basis of the phase differences that can be determined under these conditions.

2. Radar sensor according to Claim 1, in which the phase detector (28) is formed by a rectifier diode, at which the signals to be compared are superimposed on each other.

3. Radar sensor according to Claim 1 or 2, in which the phase shifter (24) is formed by an IQ modulator.

4. Radar sensor according to one of the preceding claims, in which each radio-frequency module (10, 12) has a local oscillator (16) and the local oscillators (16) of the various radio-frequency modules (10, 12) are connected to a common reference signal source (30) via lines of a known length.

5. Radar sensor according to one of the preceding claims, in which each radio-frequency module (10, 12) has a mixer (22) which is designed to mix a signal received in a receiving channel (RX) with a signal transmitted in a transmitting channel (TX).

6. Radar sensor according to Claim 5, in which a synchronization signal output of each radio-frequency module (10, 12) can be coupled to a synchronization signal input of each other radio-frequency module (12, 10) via a signal path (L) and the signal received via the synchronization signal path (L) in each radio-frequency module can be supplied as a transmission signal to the mixer (22) of this radio-frequency module via a further signal path (EXT1, EXT2).

7. Radar sensor according to Claim 6, in which, in each of the radio-frequency modules (10, 12), an output of at least one transmitting channel (TX) forms the synchronization input and the synchronization output of this radio-frequency module.

8. Radar sensor according to Claim 6 or 7, in which the mixer (22) of each radio-frequency module (10, 12) can be supplied with the output signal from its own local oscillator (16) as a test signal via a signal path (TST1).

9. Radar sensor according to one of Claims 5 to 8, in which each radio-frequency module (10, 12) has a further mixer (26) which is designed to monitor the complex amplitude of the signal transmitted in the transmitting channel (TX) of this radio-frequency module.

**Revendications**

1. Capteur radar avec au moins deux composants à haute fréquence (10, 12) fonctionnant de manière synchrone, qui présentent chacun au moins un chemin de signal (TX1, TST1 ; TX2, TST2), la phase du signal haute fréquence transmis étant modifiée d'une différence de phase dépendant de la température, **caractérisé en ce que**, dans chaque composant à haute fréquence (10, 12), est monté en parallèle au chemin de signal (TX1, TST1 ; TX2, TST2) un détecteur de phase (28) qui délivre un signal (U) qui prend une valeur extrême indépendante de la température pour une différence de phase déterminée, **en ce qu'**un déphaseur (24) est agencé dans le chemin de signal (TX1, TST1 ; TX2, TST2), permettant de régler la différence de phase de telle sorte que le signal (U) du détecteur de phase prenne la valeur extrême, et **en ce qu'**un dispositif de commande électronique est conçu pour régler les différences de phase dans les trajets de signaux desdits au moins deux composants à haute fréquence de telle sorte que le signal (U) du détecteur de phase prenne la valeur extrême, et pour synchroniser les composants à haute fréquence les uns avec les autres en utilisant des différences de phase déterminables dans ces conditions.

2. Capteur radar selon la revendication 1, dans lequel le détecteur de phase (28) est constitué par une diode redresseuse sur laquelle les signaux à comparer sont superposés les uns aux autres.

3. Capteur radar selon la revendication 1 ou la revendication 2, dans lequel le déphaseur (24) est constitué par un modulateur IQ.

4. Capteur radar selon l'une des revendications précédentes, dans lequel chaque composant à haute fréquence (10, 12) comprend un oscillateur local (16) et les oscillateurs locaux (16) des différents composants à haute fréquence (10, 12) sont reliés, par des lignes de longueur connue, à une source de signal de référence commune (30).

5. Capteur radar selon l'une des revendications précédentes, dans lequel chaque composant à haute fréquence (10, 12) comprend un mélangeur (22) qui est conçu pour mélanger un signal reçu dans un canal de réception (RX) avec un signal émis dans un canal d'émission (TX).

6. Capteur radar selon la revendication 5, dans lequel une sortie de signal de synchronisation de chaque composant à haute fréquence (10, 12) est apte à être reliée, via un chemin de signal (L), à une entrée de signal de synchronisation de chaque autre composant à haute fréquence (12, 10) et le signal reçu via le chemin de signal de synchronisation (L) dans chaque composant à haute fréquence est apte à être acheminé via un autre chemin de signal (EXT1, EXT2) au mélangeur (22) de ce composant à haute fréquence en tant que signal d'émission.

7. Capteur radar selon la revendication 6, dans lequel, dans chacun des composants à haute fréquence (10, 12), une sortie d'au moins un canal d'émission (TX) forme l'entrée de synchronisation et la sortie de synchronisation de ce composant à haute fréquence.

8. Capteur radar selon la revendication 6 ou la revendication 7, dans lequel le signal de sortie de l'oscillateur local propre (16) est apte à être transmis en tant que signal de test au mélangeur (22) de chaque composant à haute fréquence (10, 12) via un chemin de signal (TST1).

9. Capteur radar selon l'une des revendications 5 à 8, dans lequel chaque composant à haute fréquence (10, 12) comprend un mélangeur supplémentaire (26) qui est conçu pour surveiller l'amplitude complexe du signal émis dans le canal d'émission (TX) de ce composant à haute fréquence.

EP 3 857 255 B1

Fig. 1